# EUROPEAN PATENT APPLICATION

(11) **EP 3 076 150 A1**
(43) Date of publication of application: **05.10.2016**
(21) Application number: 16162075.2
(22) Date of filing: 23.03.2016
(51) Int. Cl.: G01N 1/06, G01N 1/28

(54) **METHODS AND APPARATUSES FOR SECTIONING AND IMAGING SAMPLES**

(30) Priority: 30.03.2015 US 201562140093 P
(71) Applicant: 3Scan Inc., San Francisco, CA 94110 (US)
(72) Inventor: DANIEL, Cody, San Francisco, CA 94110 (US); GOODMAN, Matthew, San Francisco, CA 94110 (US); KOLK, Sean, San Francisco, CA 94110 (US); HUFFMAN, Todd, San Francisco, CA 94110 (US)
(74) Representative: Price, Nigel John King

(57) **Abstract**

The present disclosure relates to methods and apparatuses for sectioning and imaging tissue or other samples, which are then automatically captured to enable subsequent analysis. The apparatus acts as a slice capture mechanism for serial sectioning microscopy in a fashion which enables subsequent interfacing with secondary microscopic interrogations or for processing with molecular diagnostic tools. The slices are spatially indexed to allow specific slices to be recalled from a library via automated handling techniques described herein.

## Description

### CROSS-REFERENCE

This application claims the benefit of U.S. Provisional Application No. 62/140,093, filed March 30, 2015, which application is incorporated herein by reference.

### BACKGROUND

The present disclosure relates to methods and apparatuses for collecting slices off an automated microscope and storing them in an indexed fashion for further investigations.

The present disclosure generally relates to systems and methods for imaging an object with a microtome. In particular, the present disclosure relates to Serial Section Microscopy, the sectioning of biological tissue and other material samples using a microtome, and more specifically the method of capturing and storing a serial set of slices.

The field of microscopy has become increasingly important in today's society for both diagnostic and research purposes in understanding human and animal cellular activity. Microscopy is generally reliant on the microtome as the first step in any research, clinical, or diagnostic application. Generating slices requires extensive specialized manual labor to produce quality sections, which are then hand mounted to glass slides, inspected manually in microscopes, and occasionally digitally imaged. This workflow is manual, tedious, and misses the scale of cells to tissues to organs due to the inability of any singular human to interpret the thousands and thousands of sections that make up even the smallest organ.

Automated microtome/microscope technology, such as that embodied in the Knife Edge Scanning Microscope (KESM) technology described in U.S. Patent #6,744,572, can automate the workflow of generating slices and gathering large amounts of imagery data. The KESM technology can gather tens of thousands of slices in the span of a day and turn the scans into an interactive, multi-scale 3D image for the microscopist to analyze. However, novel generation of slices and images may require a novel method of interacting with standard stain procedures and diagnostic tests.

Presently, slices are siphoned away from the front edge of the knife and discarded after imaging. This practice can make standard histology, pathology, and molecular diagnostic tests impractical. Current methods either do not capture and store the slices, or require manual labor to catch the slices. Currently, methods for capturing a slice of a sample also do not indicate the location of a particular slice as it relates to neighboring slices. Traditionally, slices of a sample cut using a microtome are captured manually by an eyelash or hair after the section comes off of the knife and placed onto a slot grid, glass slide, or cassette. This process is not only time consuming, but can be unreliable in that it can potentially damage fragile sections of tissue.

Accordingly, current methods of handling the slices or sections generated by automated microtome technologies are less than ideal in many cases. There are therefore needs for improved methods and systems to address at least some of the above challenges. For example, the methods and systems provided herein may sort and index the slices or sections generated to facilitate their use in subsequent interrogations. There may further be needs to automate the workflow in handling the slices or sections such that analysis of the slices or sections at very large scale can be feasible.

### SUMMARY

The present disclosure includes methods and apparatuses that enable the KESM to be more functional by automating the process of capturing the slices after imaging.

An example application demonstrating the utility of the present disclosure includes, but is not limited to, examining a biopsy for traces of cancerous tissue, identifying a region that holds structures expected of cancerous tissue, retrieving the captured slices from this region, and using a complex pathology stain panel to identify the exact type of cancerous tissue present in the structure. Another example of a research application would be sectioning a large volume of neurological tissue, finding a region that requires higher resolution interrogation, retrieving these indexed slices, and examining using an electron microscope. Multi-mode interrogations are readily enabled by the present disclosure, and further the utility of the original automated sectioning paradigm.

Improved systems and methods are provided by the present disclosure, and may be referred to as a "Slice Capture System," which allows a large volume of unique slices of a sample cut by a microtome to be gathered and stored in a known location in a semi-permanent storage media as they are imaged by the KESM. In particular, the Slice Capture Systems disclosed can automate the slice collection process and allow for fast retrieval of a particular sample section.

The present disclosure includes embodiments of the Slice Capture System. The embodiments include slice capture methods, where variations can serve the same or similar functions of capturing and storing sections of a sample, but may each be more appropriate for differing imaging and research needs.

The present disclosure provides mechanisms that allow for automated sectioning and new large-scale digital pathology techniques to interface with standardized clinical and pathological diagnostics and tests. The techniques can be able to accommodate different kinds of tests, some using molecular diagnostic techniques on large numbers of aggregate slices, some using functional stains on standard slices laid flat. Further, embodiments of the present disclosure can allow for the automated sectioning to operate at high speeds while storing slices for inspection at a human pathologist's pace. The methods and apparatuses disclosed herein can act as a buffer between the first step of coarse structural interrogation and the second step of function inspection.

The present disclosure provides methods for automated Slice Capture, a technology which can expand the capabilities of the Knife Edge Scanning Microscope (KESM) technology or any serial sectioning technology to allow further interrogation of sections after the sections have been first made or imaged. Slice Capture technology can enable any serial sectioning device to recall the slices generated by sectioning for secondary interrogations. These interrogations may be for secondary staining, molecular analysis, sequencing, electron microscopy, visual microscopy, or any other method that generates more information after the original section has been taken. Taken together, the Slice Capture technology with the KESM technology can allow interrogations to scale from macroscopic levels to molecular levels with a continuous flow of instrumentation.

Aspects of the disclosure can include registering or indexing between the gathered 2D image, the generated 3D model, and the storage media. This registering or indexing can allow one to easily translate between features identified in the first pass imaging of a section, slices correlated to this area, the physical slices stored in media, and the subsequent interrogations by any method.

Embodiments described herein may provide a number of technical advantages. Currently, microtomes either do not capture slices or if they do, the process is done manually. For example, currently slices from a microtome may be captured by hand by using an eyelash or hair as the slice moves through a water channel after being cut.

Furthermore, current methods may not allow one to know with particularity where a slice comes from in a sample or how it correlates to neighboring slices. This inability can make relating a subsequent interrogation or stain to a ground truth model more challenging.

Current methods also may not scan the sample during sectioning, but rather produce a series of slices on a tape that are imaged later, with no background model to refer against.

Aspects of the present disclosure provide methods of capturing sequential slices of an object from a microtome and recalling any particular slice from a sequential set.

Embodiments of each Slice Capture System component described herein may provide a number of technical advantages depending upon the material of the section and the characteristics of the secondary interrogation. Sample section materials may include any variety of biological tissue embedded in paraffin or resin substrates. These differing substrates, having differing mechanical and chemical properties, may require varied methods to process and prepare the sections for storage. Sliced sections may curl, warp, or otherwise be deformed by sectioning, making storage more difficult or impractical, depending on the secondary interrogation desired. The present disclosure provides mechanisms which together allow for consistent and repeated successful generation, storage, and retrieval of sections from an automated microtome.

Aspects of the present disclosure provide methods of capturing sequential slices of an object from a microtome. An exemplary method may be comprised of four steps affecting each slice of the object. First, a section may be extracted from the knife edge of a KESM or microtome as the slice is made. Second, a section may be manipulated by a variety of forces to prepare the section for efficient downstream processing so that the section is laid flat. Third, a section may be indexed into a storage medium to provide a unique reference point to the physical location of a section. Fourth, a section may be kept in a storage system which allows later automated or manual retrieval of sections for secondary interrogations.

Embodiments of the present disclosure provide exemplary methods of processing one or more sections or slices of a sample from a microtome of a microscopy system. A slice or section of the sample may be extracted from the microtome. The extracted slice or section may be directed away from the microtome. The extracted slice or section directed away from the microtome may be smoothed. The smoothed slice or section may be indexed. The indexed slice or section may be stored. The stored slice or section may then later be retrieved.

Embodiments of the present disclosure provide a method of capturing and extracting at least one slice of an object from a microtome of a microscopy system. A flow of fluid may be provided through one or more tubes coupled to the microscopy system. A slice of the object may be directed away from the microtome to the one or more tubes. The flow of fluid through the one or more tubes may be provided by suctioning fluid with one or more of a motor or pump system. The slice of the object may be directed toward a strainer which captures the slice. The slice of the object may be directed to either a slice capture system or a bypass system which does not capture the slice, such as if it is desired that the slice be discarded.

Embodiments of the present disclosure provide a method of capturing and extracting at least one slice of an object from a microtome of a microscopy system. Tension may be provided on a mechanical conveyor. A slice of the object may be directed away from the microtome by a mechanical conveyance. The mechanical conveyance may either applied before or after the slice of an object is cut by a microtome. The slice of the object from the microtome may be directed using a conveyor which may be embodied as a tape, mesh, or film powered by a motor.

Embodiments of the present disclosure provide a method of capturing and extracting sequential sections or slices of an object from a microtome of a microscopy system. An electrostatic charge may be provided to the microscopy system. A slice of the object may be directed away from the microtome by an opposing electrostatic charge. The electrostatic charge directing the slice of the object from the microtome may be generated by an electrode and an extractor.

Embodiments of the present disclosure provide a method of manipulating and removing deformations from sequential sections or slices of an object from a microtome of a microscopy system. Deformations may be manipulated with an electrostatic force with a certain electric charge. The object may be prepared in a flat fashion for storage by applying an electrostatic charge. To generate the necessary electrostatic charge, electric charge may be accumulated on the microtome.

Embodiments of the present disclosure provide a method of manipulating and removing deformations from sequential sections or slices of an object from a microtome of a microscopy system. Deformations may be manipulated with a fluidic force. The object may be prepared in a flat fashion for storage by applying a fluid force that may heat and bend the slice.

Embodiments of the present disclosure provide a method of manipulating and removing deformations from sequential sections or slices of an object from a microtome of a microscopy system. Deformation may be manipulated with a thermal cycling operation. The object may be prepared in a flat fashion for storage by applying a thermal cycling operation to heat and bend the slice. The thermal cycling operation may include one or more steps of accumulating fluidic heat in air or water or other media, providing mechanical vibration, or providing pressure.

Embodiments of the present disclosure provide a method of manipulating and removing deformations from sequential sections or slices of an object from a microtome of a microscopy system. Deformations may be manipulated with a mechanical roller. The object may be prepared in a flat fashion for storage by applying a compressive force.

Embodiments of the present disclosure provide a method of indexing sequential sections or slices of an object from a microtome of a microscopy system. Each sequential slice may be adhered to a linear tape separated by a known distance. The tape may be advanced the known distance with a computer controlled motor. The linear tape may be advanced by a mechanical conveyance.

Embodiments of the present disclosure provide a method of storing sequential sections or slices of an object from a microtome of a microscopy system. A predetermined filter well within a filter matrix may be selected for storing the slice. The slice of the object may be directed to the predetermined filter well within the filter matrix. The filter matrix may comprise a plurality of rows and a plurality of columns for a plurality of filter wells of the filter matrix. The one or more storage index addresses may comprises a row number and a column number.

Embodiments of the present disclosure provide a method of storing sequential sections or slices of an object from a microtome of a microscopy system. A predetermined container for storing the slice may be selected. The slice of the object may be directed to the predetermined container.

Other goals and advantages of the present disclosure will be further appreciated and understood when considered in conjunction with the following description and accompanying drawings. While the following description may contain specific details describing particular embodiments of the disclosure, this should not be construed as limitations to the scope of the disclosure but rather as an exemplification of preferable embodiments. For each aspect of the disclosure, many variations are possible as suggested herein that are known to those of ordinary skill in the art. A variety of changes and modifications can be made within the scope of the disclosure without departing from the spirit thereof.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF THE DRAWINGS

The novel features of the present disclosure are set forth with particularity in the appended claims. A better understanding of the features and advantages of the present disclosure will be obtained by reference to the following detailed description that sets forth illustrative embodiments, in which the principles of the present disclosure are utilized, and the accompanying drawings of which:
FIG. 1A is a section view of a portion of an exemplary Slice Capture System during a slice capture step employing a fluid and a fluid pump system to capture a sample as it is sliced by the KESM, according to many embodiments.
FIG. 1B is a section view of a portion of an exemplary Slice Capture System during a slice capture step employing a series of mechanized roller or a tape to capture a sample as it sliced by the KESM, according to many embodiments.
FIG. 1C is a section view of a portion of an exemplary Slice Capture System during a slice capture step employing an electrostatic force to capture a sample as it is sliced by the KESM, according to many embodiments.
FIG. 2A is a section view of a portion of an exemplary Slice Capture System during a slice manipulation step employing a thermal cycling force to remove deformations from a sample, according to many embodiments.
FIG. 2B is section view of a portion of an exemplary Slice Capture System during a slice manipulation step employing a mechanical roller to remove deformations from a sample, according to many embodiments.
FIG. 2C is a section view of a portion of an exemplary Slice Capture System during a slice manipulation step employing an electrostatic force to remove deformations from a sample, according to many embodiments.
FIG. 3A is a schematic illustrating an exemplary Slice Capture System during a slice indexing step employing a linear tape to index the location of a sample, according to many embodiments.
FIG. 3B is a schematic illustrating an exemplary Slice Capture System during a slice indexing step employing a filter array to index the location of a sample, according to many embodiments.
FIG. 4 is a flow chart illustrating an exemplary method of processing slices of a sample using Slice Capture Systems, according to many embodiments.

### DETAILED DESCRIPTION OF THE INVENTION

Example embodiments of the present disclosure and their advantages are best understood by referring now to the drawings herein, in which like numerals and letters refer to like parts.

In the following description of the various embodiments, reference is made to the accompanying drawings, which form a part hereof, and in which is shown by way of illustration a specific embodiment in which the invention may be practiced. It is to be understood that other embodiments may be utilized and structural changes may be made without departing from the scope of the present invention. It should be understood that various alternatives to the embodiments of the systems and methods described herein may be employed in practicing the embodiments described herein. It is intended that the following claims define the scope of disclosure and that methods and structures within the scope of these claims and their equivalents be covered thereby.

### DEFINITIONS

"Section" or "slice" refers to a single strip of contiguous material that was removed from the block face of a sample by way of a relative motion between the sample and the knife or other cutting mechanism.

"Serial Section Microscopy" refers to the practice of taking serial sections with a microtome and imaging them, such as traditionally by mounting the slices to glass and staining.

"Knife Edge Scanning Microscope" or "KESM" refers to a microscope that performs Serial Section Microscopy in an automated fashion (such as that described in U.S. Patent #6,744,572, the contents of which are fully incorporated herein by reference)

"Microtome" refers to a device in which a block of material is precisely cut such that a very thin layer of material is removed, or sectioned, from the surface of the block.

"Imagery" shall include any technique designed to measure an "image", a spatial map of an optical or electronic response. The techniques include optical/electron microscopy techniques, to name a few.

"Imaging" generally refers to data collection in order to generate a visualization of a given area.

"Stain" refers to a chemical treatment, which aims to change the photonic response of all or parts of a medium by methods including but not limited to attaching a pigment, a genetically expressed fluorophore, or chemistry designed to modify the target structure to be imaged.

"Molecular Diagnostic" refers to a form of chemical test or assay, which takes a sample of tissue and identifies biological markers to make a diagnostic.

"Multiplex" refers to a method of selecting one location within a matrix by having two selective addressing systems on both sides of the matrix, thus needing only 2N selectors to address N^2 locations.

"Tubes and connections" refers to a system of NPT threaded PVC pipes, tubes, and connectors that allows water to flow through the KESM system.

"Relay" refers to an electrically operated switch, which uses a coil to isolate separate currents from interacting with each other.

"Transistor" refers to a semiconductor device used to amplify and switch electronic signals and electrical power. Transistors are composed of semiconductor material with at least three terminals for connection to an external circuit.

"Switch" refers to a switch is an electrical component that can break an electrical circuit, interrupting the current or diverting it from one conductor to another.

"Ball Valve" refers to a valve with a spherical disc, the part of the valve, which controls the flow through it. The sphere has a hole, or port, through the middle so that when the port is in line with both ends of the valve, flow will occur. When the valve is closed, the hole is perpendicular to the ends of the valve, and flow is blocked.

"Solenoid valve" refers to an electro-mechanically operated two-port valve. The valve is controlled by an electric current through a solenoid, which controls the flow of water through the valve. The valve remains closed until a current, such as a 12VDC, is applied to the two terminals on the valve, the valve opens and water can flow through.

"Deformations" refer to the changes in shape that take place in a slice incurred by the sectioning process which result in varying warping, curling, elongation, tearing, crinkling, waving in a generated section.

### SLICE CAPTURE SYSTEM

Embodiments of the Slice Capture System may provide systems and methods for capturing and storing slices of a sample in the water flow coming off the KESM system

### SLICE CAPTURE

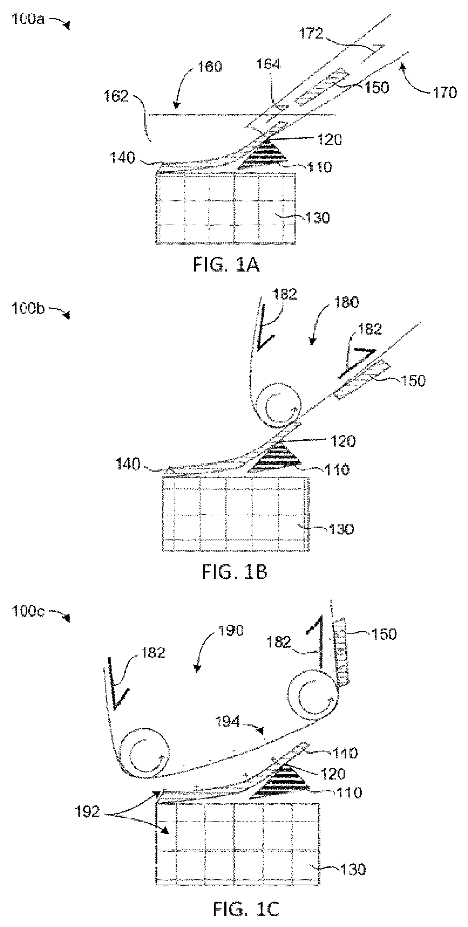

Aspects of the present disclosure provide methods of capturing sequential slices of an object from a microtome. FIG. 1A shows an exemplary method 100a of capture and extraction comprising a step of moving each slice 140 away from the knife edge 120 of the KESM with a constant flow of fluid 162 over the surface of the microtome blade 110. The fluid 162 may be suctioned by a fluid pump system connected by tubes and connections to a suction channel 170 located directly over the microtome edge 120. The force provided by fluidic drag on the slice 140 may keep the section taut and may pull it free of the knife 110 and block 130, thereby extracting the section 140. The pump may provide suction 172, moving the fluid 162 from an immersion bath 160 which the sample 130 and knife 110 are immersed in, while also moving the captured section 150 through the suction channel 170 and conveying it away from the microtome edge 120 along the fluid path 164. The captured slice 150 may be suctioned through a series of tubes and connections to either a capture or a bypass system. The bypass system may have a filter for non-captured slice disposal. The fluid 162 may be returned to the pump and finally back to the immersion bath 160. The mechanism for the power and the wiring of the capture and bypass system may be configured to be controlled manually or by computerized control. The activation of a valve to the bypass system may direct the flow of water carrying a slice through a series of tubes to be flushed from the system.

Further methods of capturing sequential slices of an object from a microtome are also provided. FIG. 1B shows an exemplary method 100b of capture and extraction comprising a step of moving each slice 140 away from the knife edge 120 of the KESM by a mechanical conveyance 180. The slice 140 may be conveyed onto a mesh, a tape, or a film 182, herein referred to as a conveyor, which may adhere to the slice 140 before or after cutting. By applying a conveyor 182 to the sample 130 before cutting with the knife 110, the section 140 may be extracted by a constant tension applied to the conveyor 182 which removes the section 140 after slicing. Similarly, the section 140 may be gathered by the conveyor 182 as it is being sectioned, allowing no interruption of cutting dynamics. In either case, the conveyor 182 may allow direct manipulation of the captured section 150 by mechanical motion. This motion may be generated by a small controlled motor able to provide a reliable and constant amount of tension or movement as each section 140 is generated.

FIG. 1C shows an exemplary method 100c of capture and extraction comprising a step of moving each slice 140 away from the knife edge 120 of the KESM by an electrostatic force. This electrostatic charge may be built up in an extractor 190, allowing the section 140 to be pulled away from the knife block 110 by the force of the electrostatic charge on the section 140. For example, the sample block 130 may be positively charged 192 such that the slice 140 may be attracted to a negatively charged 194 extractor 190. Alternatively, the charges may be the reverse, with the sample 130 being negatively charged 194 and the extractor 190 being positively charged 192. This may allow the section 140 to be rapidly extracted. Thin sections 140 have large susceptibility to electric charge, having enormous surface area to volume ratios. An electrode may induce a large charge in a captured section 150, repelling it away from the knife edge 120 after sectioning.

### SLICE MANIPULATION

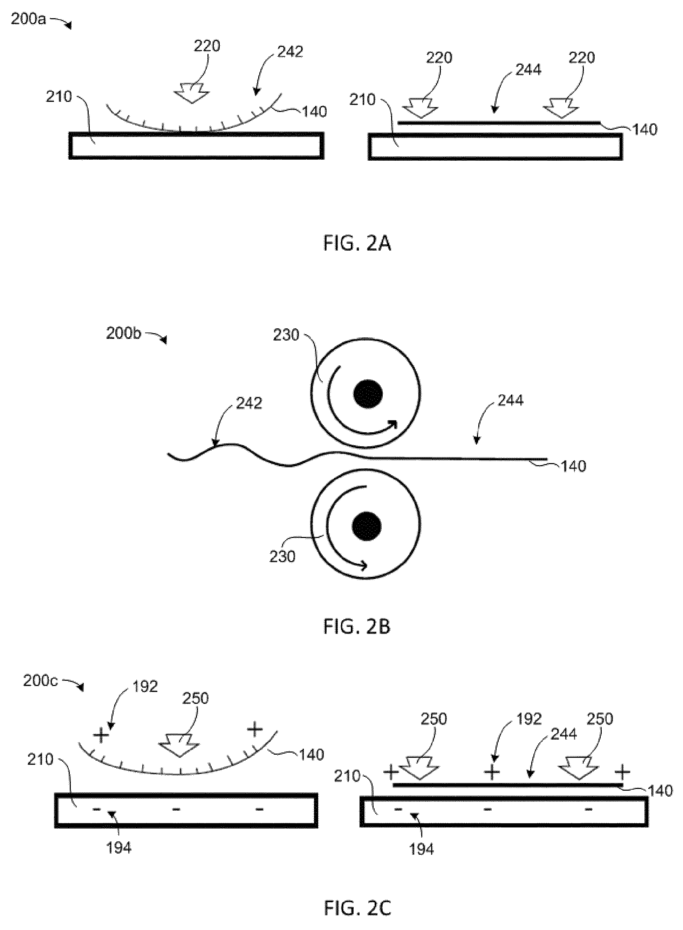

Aspects of the present disclosure provide methods of capturing sequential slices of an object from a microtome and manipulating the slice to prepare it for storage. FIG. 2A shows an exemplary method 200a of manipulation comprising a step of applying a thermal cycling force 220 to prepare the section 140 for a storage step. Thermal cycling 220 may remove deformations 242 after sectioning to allow the section 140 to more easily be stored flat 244 on a flat surface 210. Thermal cycling 220 may occur through any variety of heating methods, including but not limited to radiation, fluidic heat transfer in air or water or other media, mechanical vibration, or pressure. Combined with the other methods presented, the thermal cycling 220 may absorb extra variance in sections 140 when captured at large scales.

Further methods of capturing sequential slices of an object from a microtome and manipulating the slice to prepare it for a storage step are also provided. FIG. 2B shows an exemplary method 200b of manipulation comprising a step of manipulating a slice 140 with a mechanical roller 230. The roller 230 may be comprised of plastic or other materials. This roller 230 may correct any curling or other slice deformations 242 that occur as a result of sectioning, and may manipulate the slice 140 into a flat storage state 244. Two oppositely rotating rollers 230 may "pick up" the leading edge of a curled section 140. As the section 140 is pulled through the rollers 230, a compressive force may then be applied, extruding the section 140 on the opposite side and relieving built up stress in the section. This may create a flattened section 242 necessary for the downstream indexing process.

FIG. 2C shows an exemplary method 200c of manipulation comprising a step of manipulating the slice 140 with an electrostatic force 250. The electrostatic force 250 may cause the section 140 to conform to a flat surface 210 of charge to force the slice 140 into a flat storage state 244 from a deformed state 242. This may allow for an electrostatic charge on the microtome to greatly influence the dynamics of the section 140. The electrostatic charge on the knife 110 may be manipulated, and the induced charge on the section 140 may cause the section 140 repel from the opposing charge, flattening the section. The section 140 may for example be positively charged 192 while the flat surface of charge 210 may be negatively charged 194, or vice versa. The charge accumulated between other parts of the system, including but not limited to the fluid, conveyance, or final storage system, may also induce this self-repulsion and flattening 244 of the slice 140.

Aspects of the present disclosure also provide methods of capturing sequential slices of an object from a microtome and manipulating the slice to prepare it for a storage step. An exemplary method of manipulation may comprise a step of applying a fluidic force to prepare the section for indexing and storage. This fluid may heat, bend, float, flatten, and move the section with the purpose of removing deformations in order to reliably gather, index, and store of each section. The fluid may also move the section to a storage site, allowing other corrections to take place after storage. A flat reference plane may be presented by floating the section to the top of an open channel of fluid. Combined with heat, the section may adopt the shape of the flat fluid plane, creating a section ready for capture.

### SLICE INDEXING

Aspects of the present disclosure provide methods of retrieving sections which have been indexed and stored. An exemplary method of storage and retrieval may be automated or manual. The storage process may be comprised of an index of sections in a variety of storage systems, which may allow consistent correlation between the index and the final storage location. The storage system may allow retrieval of slices from the storage system. The retrieval process may retrieve one section or it may retrieve multiple sections. The retrieval process may be guided by a computationally informed or guided decision or an automatic action.

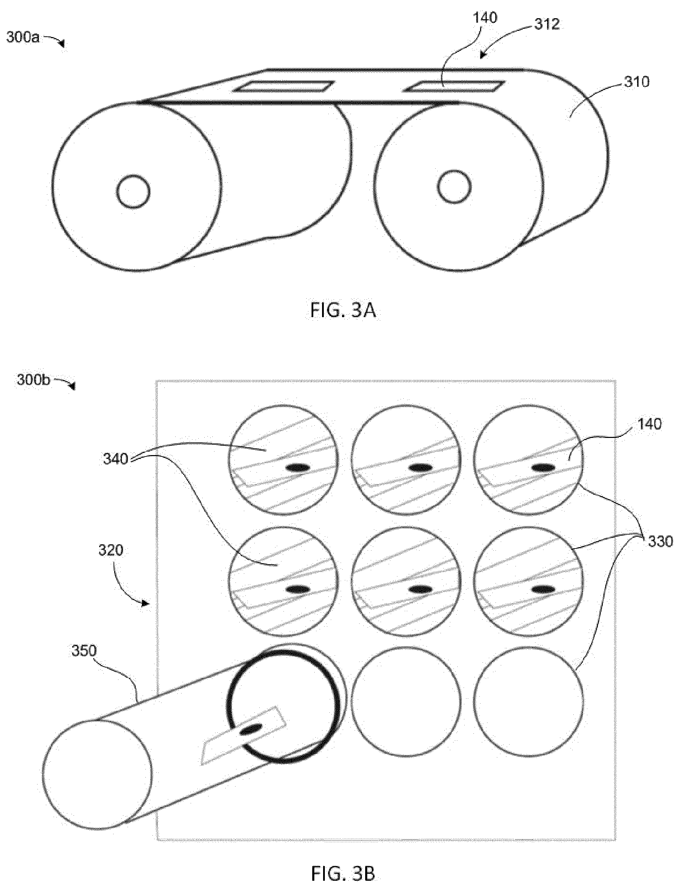

Aspects of the present disclosure provide methods of capturing sequential slices of an object from a microtome and indexing the slice to prepare it for a storage step. FIG. 3A shows an exemplary method of indexing 300a comprising a step of indexing slices 140 of an object 130 on a linear tape 310 after they have been extracted and manipulated as described herein. As described herein, a particular section 140 may be correlated to a point on the linear index on the tape 312, which may be used to mark the known correlation between a particular section 140 and its final storage location. This linear tape 310 as described in this indexing step may be embodied as the mechanical conveyance 180 utilized in the first step. The linear tape 310 may maintain tension to present a flat surface which the sections 140 may adhere to. The indexing of the tape 310 may be carried out by a computer-controlled motor moving the tape, allowing known linear distances 312 on the tape 310 to correspond to particular sections 140 placed along the length of the tape 310.

Further methods of capturing sequential slices of an object from a microtome and indexing the slice to prepare it for a storage step are also provided. FIG. 3B shows an exemplary method 300b of indexing comprising a step of indexing a slice(s) 140 into a filter(s) 340. A filter 340 or an array of filters 320 may provide a known indexed storage place for one or more sections 140, which may allow a known slice(s) 140 to be correlated with a its final storage location. As described herein, if the method of a slice manipulation is with a fluid, then the filters 340 may be presented in a multiplexed fashion to the fluid flow via one or more connection tubes 350, allowing multiple storage sites for the same fluid flow to be alternately presented. As sections 140 accumulate in a filter 340, the filter 340 may be swapped out for another filter site 330 or the present filter site 330 may remain in the fluid flow to accumulate further sections 140. The swapping of filter sites 330 may be executed by a series of actuated solenoid valves, which may be computer-controlled. The solenoid valves may be arranged in any fashion, which may allow branching of the fluid flow into discrete filter sites 330, each uniquely indexed.

Aspects of the present disclosure provide methods of capturing sequential slices of an object from a microtome and indexing the slice to prepare it for a storage step. An exemplary method of indexing may comprise a step of indexing a slice(s) into a set of containers. The containers may be altered to work with other instrument which may necessitate a useful container structure. These containers may allow indexing of one or multiple sections, which may allow a known slice(s) to be correlated with its final storage location. Sections may be moved into a container by any of the slice manipulations described herein. Containers may be handed off in an automatic fashion to a second instrument, for example a DNA sequencer, mass spectroscopy machine, or any other secondary interrogation method.

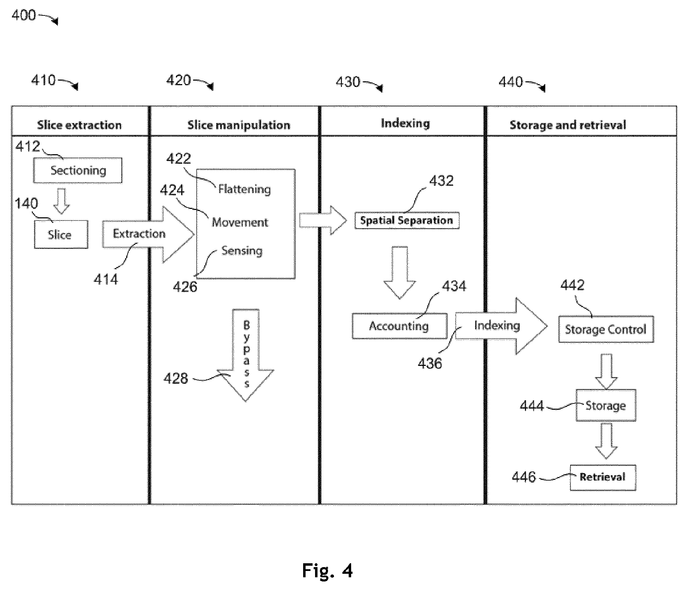

Aspects of the present disclosure provide methods of capturing sequential slices of an object from a microtome. FIG. 4 shows an exemplary method 400 comprised of four steps. The method 400 may comprise one or more steps or sub-steps of the slice capture, manipulation, and indexing steps described above.

In a first step 410, a slice 140 may be captured and extracted from the knife edge of a KESM or microtome as the slice is made. The first step 410 may comprise one or more sub-steps including a step 412 of sectioning a slice 140 of an object and a step 414 of extracting the slice 140 away from the microtome for further manipulation. First step 410 may for example comprise any of the methods 100a, 100b, or 100c as previously described herein or similar.

In a second step 420, the section 140 may be manipulated by a variety of forces to prepare the section 140 for efficient downstream processing so that the section is laid flat. These manipulation forces may include one or more of a flattening 422, a movement 424, or a sensing 426. Alternatively, the section 140 may be directed to a bypass system 428 which may be used for slice 140 disposal as previously described herein. Second step 420 may for example comprise any of the methods 200a, 200b, or 200c as previously described herein or similar.

In a third step 430, a section 140 may be indexed into a storage medium to provide a unique reference point to the physical location of a section 140. The step 430 may comprise one or more sub-steps including the a sub-step 432 of creation of spatial separation between slices 140, a sub-step 434 of accounting of the slices 140, and a sub-step 436 of indexing the slices 140 into a storage medium for storage and retrieval of sections. The step 430 may, for example, comprise any of the method 300a or 300b as previously described herein or similar.

In a fourth step 440, the section 140 may be kept in a storage system 442 which may a sub-step 444 of storage of the sections 140 and a later sub-step 446 of automated or manual retrieval of the sections 140 for secondary interrogations.

In an exemplary embodiment of method 400 comprising the steps 100a, 100b, or 100c; 200a, 200b, or 200c; and 300a or 300b as described herein or similar, slices may come off the knife of the KESM and flow through a standard liquid or water channel. The apparatus may be configured such that slices may flow through a series of suction tubing before being multiplexed through a filter array. A particular filter well may be chosen from the filter where slices may be stored. The filter array may then be removed, maintaining the registered slices in the filters for further inspections.

As slices leave the knife-edge they may move at the average velocity of the liquid or water flow through a series of tubes and connections. The liquid or water flow may enter a manifold with a single input and multiple output channels, with multiple electronically controlled solenoids that open or close flow out of the manifold. This may present a series of rows over the top of the filter well matrix. The bottom of the filter well matrix may be comprised of a series of columns, which exit through an equivalent series of solenoids and a manifold. The orientation of the solenoids in the filter matrix described here can be arranged such that each slice moves through the water channels at the same average velocity, and the solenoids may be timed to place slices in specific locations within the filter well matrix. In this way, for example, 20 total solenoids - 10 on each side of the filter matrix - can address 100 locations within the matrix. This arrangement can reduce cost and complexity of the operating system. Multiple slices may be also kept in each filter assembly. Individual slices may be selected out of a collection by mounting all the slices in the collection and re-imaging in an automated slide scanner. The filter matrix embodiment can be more suited to storing a number of slices from a more general region, which can then be extracted for examination. Such a channel system is described in U.S. Provisional Application No. 62/140,093, filed March 30, 2015, which application is incorporated herein by reference.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

## Claims

1. A method of processing one or more sections or slices of a sample from a microtome of a microscopy system, the method comprising:
extracting a slice or section of the sample from the microtome;
directing the extracted slice or section away from the microtome;
smoothing the extracted slice or section directed away from the microtome;
indexing the smoothed slice or section;
storing the indexed slice or section; and
retrieving the stored slice or section.

2. The method of claim 1, wherein extracting the slice or section of the sample from the microtome and directing the extracted slice or section away from the microtome comprise:
providing a flow of fluid through one or more tubes coupled to the microscopy system; and
directing the slice or section away from the microtome to the one or more tubes, and
wherein optionally providing the flow of fluid through the one or more tubes comprises suctioning fluid with one or more of a motor or pump system.

3. The method of claim 2, wherein directing the slice or section away from the microtome comprises directing the slice or section toward a strainer, and wherein directing the slice or section toward the strainer optionally comprises directing the slice or section to either a slice capture system or a bypass system which does not capture the slice.

4. The method of claim 1, wherein extracting the slice or section of the sample from the microtome and directing the extracted slice or section away from the microtome comprise:
providing tension on a mechanical conveyor; and
directing the slice or section of the object away from the microtome by a mechanical conveyance from the mechanical conveyer, and
wherein the mechanical conveyance is optionally either applied before or after the slice or section of the object is cut by the microtome, and
wherein directing the slice or section from the microtome optionally comprises providing a conveyor comprising one or more of a tape, mesh, or film powered by a motor.

5. The method of claim 1, wherein extracting the slice or section of the sample from the microtome and directing the extracted slice or section away from the microtome comprise:
providing a first electrostatic charge to the microscopy system; and
directing the slice or section of the object away from the microtome by a second electrostatic charge opposing the first electrostatic charge,
wherein one or more of the first or second electrostatic charge is optionally generated by an electrode and an extractor.

6. The method of any one of the preceding claims, wherein smoothing the extracted slice or section comprises applying an electrostatic force to flatten the extracted slice or section, wherein applying the electrostatic force optionally comprises accumulating an electric charge on the microtome.

7. The method of any one of claims 1 to 5, wherein smoothing the extracted slice or section comprises applying a fluidic force to heat and bend the slice or section to flatten the slice or section.

8. The method of any one of claims 1 to 5, wherein smoothing the extracted slice or section comprises applying a thermal cycling operation to heat and bend the slice to flatten the slice or section, and wherein applying the thermal cycling operation optionally comprises one or more of accumulating fluidic heat in air or water or other media, providing mechanical vibration, or providing pressure.

9. The method of any one of claims 1 to 5, wherein smoothing the extracted slice or section comprises applying a compressive force to the slice or section with a mechanical roller.

10. The method of any one of the preceding claims, wherein indexing the smoothed slice or section and storing the indexed slice or section comprises:
adhering a first slice or section to a linear tape at a first predetermined position;
advancing the linear tape a predetermined distance with a computer controlled motor; and
adhering a second slice or section to the linear tape at a second predetermined position, the first and second predetermined positions being separated on the linear tape by the predetermined distance,
wherein the linear tape is optionally advanced by a mechanical conveyer.

11. The method of any one of claims 1 to 9, wherein indexing the smoothed slice or section and storing the indexed slice or section comprises:
selecting a predetermined filter well within a filter matrix for storing the slice or section; and
directing the slice or section to the predetermined filter well within the filter matrix, and
wherein the filter matrix optionally comprises a plurality of rows and a plurality of columns for a plurality of filter wells of the filter matrix, the one or more storage index addresses comprising a row number and a column number.

12. The method of any one of claims 1 to 9, wherein indexing the smoothed slice or section and storing the indexed slice or section comprises:
selecting a predetermined container for storing the slice or section; and
directing the slice or section to the predetermined container.
